# FASCICULE DE BREVET EUROPEEN

(11) **EP 0 996 272 B1**
(45) Date de publication et mention de la délivrance du brevet: **16.11.2005**
(21) Numéro de dépôt: 99402548.4
(22) Date de dépôt: 15.10.1999
(51) Int. Cl.: H04M 3/54, H04M 1/72

(54) **Procédé d'activation d'un processus de transfert d'appel et terminal téléphonique pour la mise en oeuvre du procédé**
Verfahren und Fernsprechendgerät zur Aktivierung eines Anrufweiterleitungsprozesses
Method for activating a call transfer process and terminal using this method

(30) Priorité: 20.10.1998 FR 9813127
(43) Date de publication de la demande: 26.04.2000
(73) Titulaire: Sagem SA, 75116 Paris (FR)
(72) Inventeur: Charbonnier, Philippe, 78600 Le Mesnil le Roi (FR); Lafourcade Jumembo, Alec, Tocoma, WA 98402 (US)
(74) Mandataire: Bloch, Gérard

(56) Documents cités:
- WO-A-95/01070
- GB-A- 2 282 735
- GB-A- 2 284 727

## Description

D'emblée, on notera que par "téléphone mobile", on entend désigner un téléphone agencé pour communiquer à travers un réseau téléphonique cellulaire, par exemple un réseau GSM, ou à travers un réseau téléphonique de satellites terrestres.

Certains opérateurs de téléphonie mobile proposent un service de transfert d'appel. Ce service permet à l'utilisateur d'un téléphone mobile, par exemple d'un réseau cellulaire GSM, de transférer ses appels entrants sur un téléphone relié à un autre réseau téléphonique, par exemple au réseau RTC.

Pour activer le processus de transfert d'appel, le téléphone mobile appelle un serveur de l'opérateur du réseau cellulaire, appelé "routeur" par l'homme du métier, s'identifie auprès de ce serveur et lui demande de rediriger les appels entrants destinés au téléphone mobile vers un autre téléphone.

Avec le développement actuel de la téléphonie mobile, les réseaux cellulaires sont de plus en plus chargés, voire surchargés. C'est pourquoi la demanderesse a cherché à désengorger les réseaux cellulaires, et plus généralement les réseaux de téléphonie mobile, en utilisant le service de transfert d'appel, tout en sécurisant un tel transfert d'appel.

Un tel service de transfert d'appel est décrit dans les documents WO 95 010 70 et GB 2 282 735.

A cet effet, l'invention concerne un procédé d'activation d'un processus de transfert d'appel pour transférer les appels entrants, destinés à un téléphone mobile d'un premier réseau de communication, sur un terminal téléphonique d'un deuxième réseau de communication, dans lequel on détermine un espace environnant le terminal téléphonique, le terminal téléphonique détecte la présence du téléphone mobile dans ledit espace, il appelle un serveur du premier réseau de communication et lui adresse une requête pour diriger les appels entrants destinés au téléphone mobile vers lui, procédé caractérisé par le fait que le terminal téléphonique transmet au serveur des données d'identification du téléphone pour que le serveur vérifie si le terminal téléphonique est autorisé à activer le processus de transfert d'appel.

Lorsque le téléphone mobile est dans l'espace environnant le terminal téléphonique, celui-ci active le processus de transfert d'appel, de façon automatique et systématique, sans intervention d'un utilisateur. On peut donc déconnecter le téléphone mobile du premier réseau de communication et continuer à recevoir les appels entrants destinés au téléphone mobile sur le terminal téléphonique. Grâce à cela, on contribue à désengorger le réseau du téléphone mobile. Toutefois, le terminal téléphonique ne peut activer le transfert d'appel, pour le compte du téléphone mobile, que s'il justifie de sa qualité pour pouvoir le faire, à l'aide des données d'identification du téléphone mobile. Grâce à cela, on peut envisager d'activer le transfert d'appel depuis différents terminaux téléphoniques, de façon simple et totalement sécurisée.

Avantageusement, on relie le téléphone mobile à un détecteur de présence lui-même relié au terminal téléphonique.

Dans un mode de réalisation particulier, on connecte le téléphone mobile à un chargeur de batterie relié au terminal téléphonique afin de détecter sa présence.

Grâce à cela, lorsque l'utilisateur place son téléphone mobile dans le chargeur afin d'en recharger la batterie, le terminal téléphonique déclenche automatiquement le processus de transfert d'appel, de façon transparente pour l'utilisateur.

L'invention concerne également un terminal téléphonique pour la mise en oeuvre du procédé ci-dessus, agencé pour communiquer à travers un réseau de communication, comprenant des moyens de détection d'un téléphone mobile dans un espace environnant le terminal téléphonique et des moyens pour activer le processus de transfert d'appel, de façon automatique, après détection d'un téléphone mobile dans ledit espace, afin de transférer les appels entrants destinés au téléphone mobile vers le terminal téléphonique, terminal caractérisé par le fait que les moyens pour activer le processus de transfert d'appel sont agencés pour transmettre des données d'identification du téléphone, détecté dans ledit espace environnant, vers un serveur de transfert d'appel.

L'invention sera mieux comprise à l'aide de la description suivante d'un mode de réalisation particulier du procédé d'activation d'un processus de transfert d'appel et d'une forme de réalisation particulière du terminal téléphonique, de l'invention, en référence au dessin annexé sur lequel:

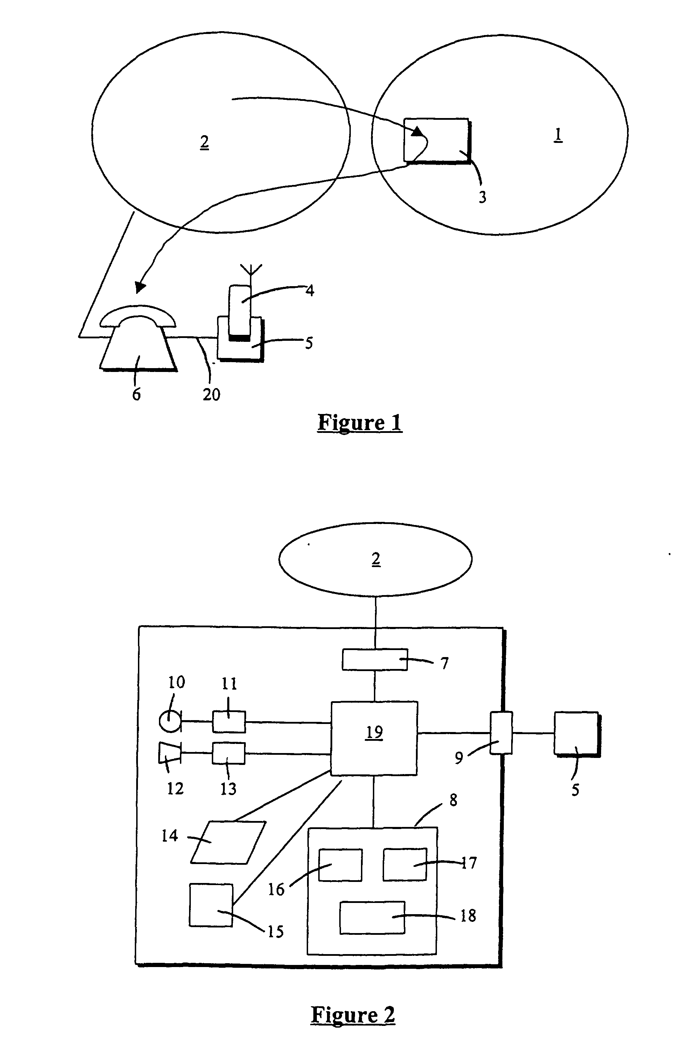

- la figure 1 représente un schéma du terminal téléphonique, d'un téléphone mobile et de deux réseaux de communication associés et
- la figure 2 représente un schéma bloc fonctionnel du terminal téléphonique.

Le procédé de l'invention permet d'activer un processus de transfert d'appel afin de transférer les appels entrants, destinés à un téléphone mobile 4 d'un premier réseau de communication téléphonique, en l'espèce un réseau cellulaire GSM 1, sur un terminal téléphonique 6 d'un deuxième réseau de communication téléphonique, en l'espèce le réseau téléphonique commuté RTC 2, sur action d'un serveur 3 du réseau cellulaire 1.

Le terminal téléphonique 6 est agencé pour communiquer à travers le réseau téléphonique 2 et dispose d'un numéro d'appel téléphonique N₁ sur ce réseau 2. Il comprend une interface ligne 7 de transmission de données, une interface homme-machine, un automate de transfert d'appel 8 et un connecteur 9 de liaison à un chargeur externe 5 de batterie de téléphone mobile.

L'interface ligne 7 est reliée par liaison filaire au réseau téléphonique 2.

L'interface homme-machine comprend un microphone 10, relié à un convertisseur analogique/numérique 11, un haut-parleur 12, relié à un convertisseur numérique/analogique 13, un clavier téléphonique de saisie 14 et un écran d'affichage 15.

L'automate de transfert d'appel 8 comporte
- un module de détection 16 pour détecter la présence, ou l'absence, d'un téléphone mobile dans un espace environnant le terminal 6, comme cela sera explicité plus loin,
- un module 17 d'activation/désactivation d'un processus de transfert d'appel et
- une mémoire 18 contenant le numéro d'appel téléphonique N₂ sur le réseau cellulaire 1 et un code d'identification du téléphone mobile 4, ainsi que le numéro d'appel téléphonique N₁ du terminal téléphonique 6.

Le terminal téléphonique 6 comprend également une unité centrale de contrôle 19, en l'espèce un processeur, destinée à commander le fonctionnement du terminal 6 et auquel tous les éléments du terminal 6 sont reliés.

Enfin, le terminal téléphonique 6 est relié à une alimentation électrique, non représentée.

Le téléphone mobile 4 dispose d'un service de transfert d'appel. Ce service, fourni par l'opérateur du réseau cellulaire 1, permet de transférer les appels entrants, destinés au numéro d'appel téléphonique N₂ du téléphone mobile 4, sur un autre numéro d'appel téléphonique, sur action du serveur 3.

Le chargeur de batterie 5, destiné à recharger la batterie du téléphone mobile 4, est relié à une alimentation électrique et comprend un logement de réception du téléphone mobile 4, des plots d'alimentation du téléphone mobile 4 et un connecteur de liaison avec le terminal téléphonique 6.

Le serveur 3, plus généralement appelé "routeur" par l'homme du métier, est prévu pour diriger les appels à travers le réseau cellulaire 1 vers leurs destinataires, autrement dit vers les numéros d'appel téléphonique appelés, et, le cas échéant, à transférer un appel entrant, destiné à un téléphone mobile du réseau cellulaire 1, sur un autre téléphone. Il fait donc également fonction de serveur de transfert d'appel On notera que le serveur 3 dispose d'un numéro d'appel téléphonique sur le réseau téléphonique 2 et comprend en mémoire une table d'utilisateurs. Celle-ci contient les numéros d'appel téléphonique sur le réseau cellulaire 1 d'une pluralité de téléphones mobiles, chacun associé à un code d'identification et, le cas échéant, à une indication de transfert d'appel spécifiant que le téléphone mobile dispose du service de transfert d'appel. La table d'utilisateurs contient en particulier le numéro d'appel téléphonique N₂ du téléphone mobile 4, associé à son code d'identification et à l'indication de transfert d'appel.

Le procédé d'activation d'un processus de transfert d'appel, pour transférer les appels entrants destinés au téléphone mobile 4 sur le terminal téléphonique 6, va maintenant être décrit.

Un utilisateur relie le terminal téléphonique 6 au chargeur de batterie 5 par le biais d'une liaison filaire 20 entre le connecteur 9 et le connecteur correspondant du chargeur 5. Le chargeur 5 fait fonction de détecteur de présence du téléphone mobile 4. On détermine ainsi un espace environnant le terminal téléphonique 6, contenant le chargeur 5 et délimité par une sphère entourant le terminal 6, espace dans lequel le terminal téléphonique 6 peut détecter la présence du téléphone mobile 4, comme cela sera explicité plus loin.

Afin de recharger le téléphone mobile 4, l'utilisateur introduit le téléphone mobile 4 dans le logement de réception du chargeur 5 en le connectant aux plots d'alimentation. On établit ainsi une liaison entre le téléphone mobile 4 et le terminal téléphonique 6, par l'intermédiaire des plots d'alimentation et du connecteur du chargeur 5, de la liaison filaire 20 et du connecteur 9 du terminal 6. Par le biais de cette liaison, sur action du module de détection 16, le terminal 6 détecte la présence du téléphone mobile 4 dans son espace environnant, dans le chargeur 5.

Après détection de la présence du téléphone 4, sous la commande du module 17 d'activation/désactivation du processus de transfert d'appel 8, le terminal 6 appelle le serveur 3 à travers le réseau téléphonique 2 et éxecute les étapes décrites ci-dessous, tendant à l'activation du processus de transfert d'appel, de façon automatique (c'est-à-dire sans intervention de l'utilisateur).

Après établissement de la communication téléphonique, le terminal téléphonique 6 adresse au serveur 3 une requête pour diriger les appels entrants destinés au téléphone mobile 4 vers lui, accompagnée de son propre numéro d'appel téléphonique N₁ ainsi que du numéro d'appel téléphonique N₂ et du code d'identification du téléphone mobile 4. En d'autres termes, le terminal téléphonique 6 envoie au serveur 3 une requête afin de transférer les appels entrants, destinés au numéro d'appel téléphonique N₂ du téléphone mobile 4, sur le numéro d'appel téléphonique N₁ du terminal 6.

Afin de vérifier si le terminal 6 est autorisé à activer le processus de transfert d'appel, le serveur 3 recherche le numéro d'appel téléphonique N₂ du téléphone mobile 4 dans la table d'utilisateurs et vérifie la validité du code d'identification associé, par comparaison avec celui contenu dans la table d'utilisateurs. Enfin, le serveur 3 vérifie que le téléphone mobile 4 dispose bien du service de transfert d'appel puis active le processus de transfert d'appel afin de transférer les appels entrants destinés au numéro d'appel N₂ sur le numéro d'appel N₁.

En cas d'appel entrant destiné au téléphone mobile 4, le serveur 3 redirige l'appel vers le terminal téléphonique 6. A la réception de l'appel, le terminal téléphonique 6 sonne, l'utilisateur décroche la ligne téléphonique et dialogue avec l'appelant, à l'aide du terminal téléphonique 6, à travers le réseau téléphonique 2.

Le terminal téléphonique 6 vérifie régulièrement la présence du téléphone mobile 4 dans le chargeur 5. Lorsque l'utilisateur retire le téléphone mobile 4 du chargeur 5, sur action du module de détection 16, le terminal téléphonique 6 détecte l'absence du téléphone 4 dans son espace environnant. Sous la commande du module 17 d'activation/désactivation du processus de transfert d'appel, le terminal téléphonique 6 appelle alors le serveur 3, de façon automatique, et il lui adresse une requête pour désactiver le processus de transfert d'appel, accompagnée du numéro d'appel téléphonique N₂ et du code d'identification du téléphone mobile 4.

Afin de vérifier si le terminal 6 est autorisé à désactiver le processus de transfert d'appel, le serveur 3 recherche le numéro d'appel téléphonique N₂ dans la table d'utilisateurs et vérifie la validité du code d'identification associé, par comparaison avec celui contenu dans la table d'utilisateurs. Puis le serveur 3 désactive le processus de transfert d'appel.

Dans la description qui vient d'être faite, le chargeur fait fonction de détecteur de présence . On pourrait bien sûr envisager de relier le terminal téléphonique à un détecteur de présence spécifiquement destiné à détecter la présence du téléphone mobile.

Au lieu d'être préenregistrées dans le terminal téléphonique, les données d'identification du téléphone mobile pourraient être acquises par le terminal à travers la liaison qui s'établit entre le terminal et le téléphone lorsque celui-ci est placé dans son chargeur, les données d'identification étant mémorisées dans le téléphone mobile.

Enfin, à la place de la liaison filaire entre le détecteur de présence et le terminal téléphonique, on pourrait envisager une liaison radio. Dans ce cas, on associerait au terminal téléphonique un espace environnant déterminé par la liaison radio.

## Revendications

1. Procédé d'activation d'un processus de transfert d'appel pour transférer les appels entrants, destinés à un téléphone mobile (4) d'un premier réseau de communication (1), sur un terminal téléphonique (6) d'un deuxième réseau de communication (2), dans lequel on détermine un espace environnant le terminal téléphonique (6), le terminal téléphonique (6) détecte la présence du téléphone mobile (4) dans ledit espace, il appelle un serveur (3) du premier réseau de communication (1) et lui adresse une requête pour diriger les appels entrants destinés au téléphone mobile (4) vers lui (6), procédé **caractérisé par le fait que** le terminal téléphonique (6) transmet au serveur (3) des données d'identification du téléphone mobile (4) pour que le serveur (3) vérifie si le terminal téléphonique (6) est autorisé à activer le processus de transfert d'appel.

2. Procédé selon la revendication 1, dans lequel on relie le téléphone mobile (4) à un détecteur de présence (5) lui-même relié au terminal téléphonique (6).

3. Procédé selon l'une des revendications 1 et 2, dans lequel on connecte le téléphone mobile (4) à un chargeur de batterie (5) relié au terminal téléphonique (6) afin de détecter sa présence.

4. Procédé selon l'une des revendications 1 à 3, dans lequel, dans le cas où téléphone mobile (4) sort de l'espace environnant le terminal téléphonique (6), celui-ci détecte l'absence du téléphone mobile (4) dans ledit espace, il appelle le serveur (3) du premier réseau de communication (1) et lui adresse une requête afin de désactiver le processus de transfert d'appel.

5. Procédé selon la revendication 4, dans lequel le terminal téléphonique transmet au serveur (3) des données d'identification du téléphone (4) pour que le serveur (3) vérifie si le terminal téléphonique (6) est autorisé à désactiver le processus de transfert d'appel.

6. Terminal téléphonique pour la mise en oeuvre du procédé selon la revendication 1, agencé pour communiquer à travers un réseau de communication, comprenant des moyens de détection (16) d'un téléphone mobile (4) dans un espace environnant le terminal téléphonique (6) et des moyens (17) pour activer le processus de transfert d'appel, de façon automatique, après détection d'un téléphone mobile (4) dans ledit espace, afin de transférer les appels entrants destinés au téléphone mobile (4) vers le terminal téléphonique (6), terminal téléphonique **caractérisé par le fait que** les moyens (17) pour activer le processus de transfert d'appel sont agencés pour transmettre des données d'identification du téléphone mobile (4), détecté dans ledit espace environnant, vers un serveur de transfert d'appel (3).

7. Terminal téléphonique selon la revendication 6, dans lequel il est prévu des moyens (9) de liaison à un détecteur de présence du téléphone mobile.

8. Terminal téléphonique selon l'une des revendications 6 et 7, dans lequel il est prévu des moyens (9) de liaison à un chargeur (5) de batterie de téléphone mobile faisant fonction de détecteur de présence.

9. Terminal selon l'une des revendications 7 et 8, dans lequel les moyens de liaison comprennent un connecteur (9) pour relier le terminal (6) au détecteur de présence (5) par liaison filaire.

## Patentansprüche

1. Verfahren zum Aktivieren eines Rufübertragungsprozesses zum Übertragen (Umleiten) von für ein Mobiltelefon (4) eines ersten Kommunikationsnetzwerks (1) bestimmten eingehenden Rufen an ein Telefonendgerät (6) eines zweiten Kommunikationsnetzwerks (2), wobei ein das Telefonendgerät (6) umgebender Raum bestimmt wird, und wobei das Telefonendgerät (6) das Vorhandensein des Mobiltelefons (4) in dem genannten Raum feststellt, einem Server (3) des ersten Kommunikationsnetzwerks (1) anruft und an diesen eine Anforderung zum Übertragen der für das Mobiltelefon (4) bestimmten Rufe auf sich (6) adressiert, **dadurch gekennzeichnet, daß** das Telefonendgerät (6) die Identifikationsdaten des Mobiltelefons (4) zum Server (3) überträgt, damit der Server (3) verifiziert, ob das Telefonendgerät (6) zum Aktivieren des Rufübertragungsprozesses autorisiert ist.

2. Verfahren nach Anspruch 1, wobei das Mobiltelefon (4) mit einem Präsenzdetektor (5) gekoppelt wird, der selbst mit dem Telefonendgerät (6) gekoppelt ist.

3. Verfahren nach einem der Ansprüche 1 und 2, wobei das Mobiltelefon (4) mit einem Batterieladegerät (5) verbunden wird, das mit dem Telefonendgerät (6) zum Bestimmen der Präsenz gekoppelt ist.

4. Verfahren nach einem der Ansprüche 1 bis 3, wobei in dem Fall, daß das Mobiltelefon (4) den das Telefonendgerät (6) umgebenden Raum verläßt, letzteres die Abwesenheit des Mobiltelefons (4) in dem genannten Raum feststellt, den Server (3) des ersten Kommunikationsnetzes (1) anruft und an ihn eine Anforderung adressiert, damit der Rufumleitungsprozeß deaktiviert wird.

5. Verfahren nach Anspruch 4, wobei das Telefonendgerät an den Server (3) Identifikationsdaten des Telefons (4) überträgt, damit der Server (3) verifiziert, ob das Telefonendgerät (6) zum Deaktivieren des Rufumleitungsprozesses autorisiert ist.

6. Telefonendgerät zur Durchführung des Verfahrens nach Anspruch 1, eingerichtet zum Kommunizieren über ein Kommunikationsnetzwerk und aufweisend Detektionsmittel (16) für ein Mobiltelefon (4) in einem das Telefonendgerät (6) umgebenden Raum und Mittel (17) zum Aktivieren des Rufübertragungsprozesses in automatischer Weise nach Feststellung eines Mobiltelefons (4) in dem genannten Raum, damit die eingehenden, für das Mobiltelefon (4) bestimmten Rufe an das Telefonendgerät (6) übertragen (umgeleitet) werden, wobei das Telefonendgerät **dadurch gekennzeichnet ist, daß** die Mittel (17) zum Aktivieren des Rufübertragungsprozesses eingerichtet sind zum Übertragen der Identifikationsdaten des in dem genannten umgebenden Raum festgestellten Mobiltelefons (4) an einen den Ruf übertragenden Server (3).

7. Telefonendgerät nach Anspruch 6, wobei Mittel (9) zum Verbinden mit einem das Mobiltelefon feststellenden Präsenzdetektor vorgesehen sind.

8. Telefonendgerät nach einem der Ansprüche 6 und 7, wobei Mittel (9) zum Anschließen eines Batterieladegeräts (5) des Mobiltelefons vorgesehen sind, das die Funktion eines Präsenzdetektors erfüllt.

9. Telefonendgerät nach einem der Ansprüche 7 und 8, wobei die Anschlußmittel einen Koppler (9) zum Verbinden des Endgeräts (6) mit dem Präsenzdetektor (5) über eine Leitungsverbindung aufweisen.

## Claims

1. Method for activating a call transfer process for transferring incoming calls, intended for a mobile telephone (4) of a first communications network (1), to a telephone terminal (6) of a second communications network (2), in which a space surrounding the telephone terminal (6) is determined, the telephone terminal (6) detects the presence of the mobile telephone (4) in said space, it calls a server (3) of the first communications network (1) and addresses to it a request to direct to terminal (6) the incoming calls intended for the mobile telephone (4), a method which is **characterised in that** the telephone terminal (6) transmits to the server (3) identification data of the mobile telephone (4) so that the server (3) checks whether the telephone terminal (6) is authorised to activate the call transfer process.

2. Method according to claim 1, wherein the mobile telephone (4) is connected to a presence detector (5) which is itself connected to the telephone terminal (6).

3. Method according to one of claims 1 and 2, wherein the mobile telephone (4) is connected to a battery charger (5) connected to the telephone terminal (6) in order to detect its presence.

4. Method according to one of claims 1 to 3, wherein, in the case where the mobile telephone (4) leaves the space surrounding the telephone terminal (6), the latter detects the absence of the mobile telephone (4) in said space, calls the server (3) of the first communications network (1) and addresses to it a request to deactivate the call transfer process.

5. Method according to claim 4, wherein the telephone terminal transmits to the server (3) identification data of the mobile telephone (4) so that the server (3) checks whether the telephone terminal (6) is authorised to deactivate the call transfer process.

6. Telephone terminal for implementing the method according to claim 1 and arranged to communicate through a communications network, comprising means (16) for detecting a mobile telephone (4) in a space surrounding the telephone terminal (6) and means (17) for activating the call transfer process, automatically, after detection of a mobile telephone (4) in said space, in order to transfer the incoming calls intended for the mobile telephone (4) to the telephone terminal (6), said telephone terminal being **characterised in that** the means (17) for activating the call transfer process are arranged to transmit identification data of the mobile telephone (4), detected in said surrounding space, to a call transfer server (3).

7. Telephone terminal according to claim 6, wherein means (9) are provided for connecting to a presence detector of the mobile telephone.

8. Telephone terminal according to one of claims 6 and 7, wherein means (9) are provided for connecting to a mobile telephone battery charger (5) acting as a presence detector.

9. Terminal according to one of claims 7 and 8, wherein the connecting means include a connector (9) to connect the terminal (6) to the presence detector (5) by a wired link.
